# EUROPEAN PATENT APPLICATION

(11) **EP 0 658 969 A2**
(43) Date of publication of application: **21.06.1995**
(21) Application number: 94119530.7
(22) Date of filing: 09.12.1994
(51) Int. Cl.: H02M 7/5387, H02M 7/527

(54) **Electric power conversion equipment**

(30) Priority: 17.12.1993 JP 317702/93
(71) Applicant: HITACHI, LTD., Chiyoda-ku, Tokyo 101 (JP)
(72) Inventor: Yasuda, Kouji, Hitachinaka-shi, Ibaraki 312 (JP); Nakata,Kiyoshi, Ibaraki 309-12 (JP); Suzuki,Masato, Naka-gun, Ibaraki 319-21 (JP); Terunuma,Mutsuhiro, Mito-shi, Ibaraki 310 (JP)
(74) Representative: Strehl Schübel-Hopf Groening & Partner

(57) **Abstract**

A two level inverter with switching elements having a higher switching frequency than GTO thyristors provides a continuous control over substantially the full range of output voltages. The inverter comprises as its pulse modes an asynchronous bipolar modulation mode, a multi-pulse mode of an overmodulation mode, and a one pulse mode. Advantageously, the multi-pulse mode and the one pulse mode are arranged to be changed, to enable a continuous control of the output voltage and reduce tone changes in the magnetic noise.

## Description

### BACKGROUND OF THE INVENTION

This invention relates to power conversion equipment which converts a direct current into an alternating current or vice versa, and in particular it relates to controlling of a pulse width modulation (PWM) inverter.

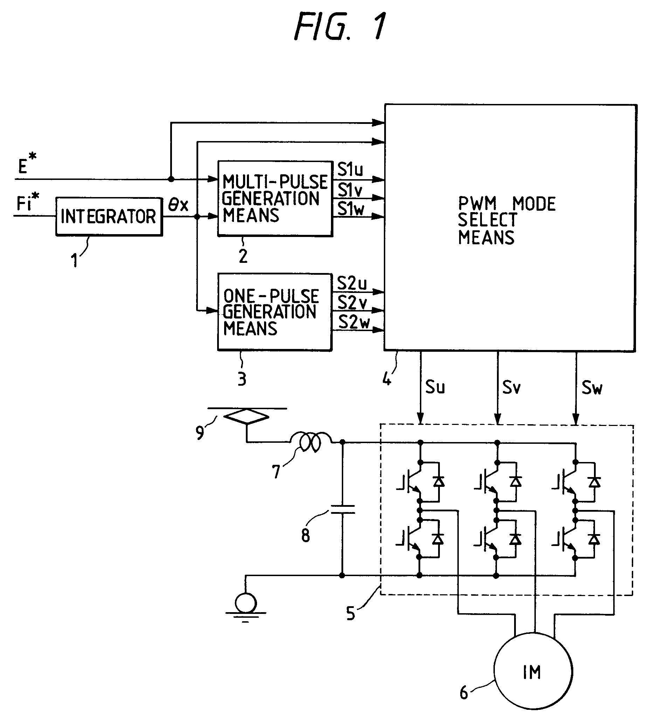

An example of prior art inverter modulation methods has been disclosed in an article on "Evaluating the Recent Inverter Control Methods" which appeared in the "Denkisha no Kagaku", pp 14, Figure. 1, April 1993, published by the Denkisha Kenkyuukai.

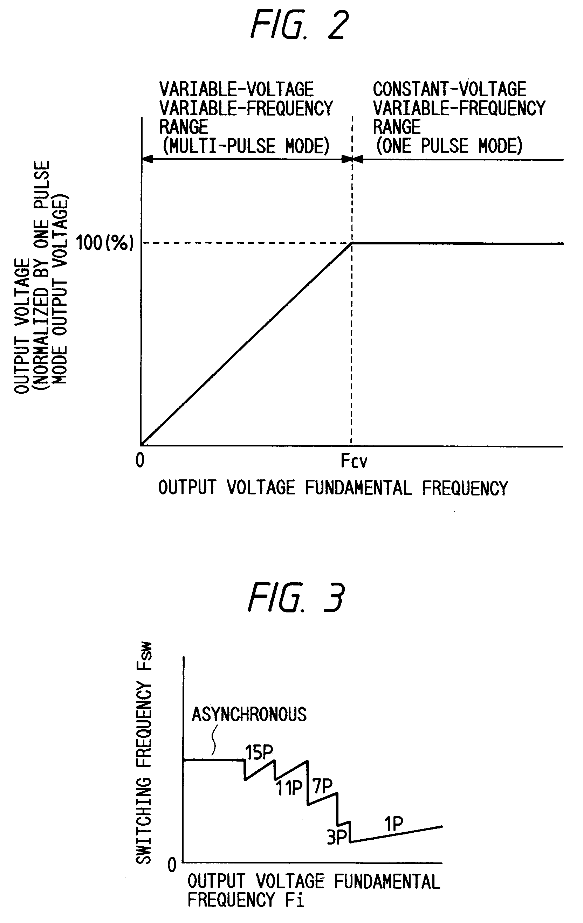

With reference to Fig. 2, in a traction motor inverter a constant control is provided to maintain a constant ratio between a magnitude of an output voltage and a fundamental frequency in such a region where an output voltage fundamental frequency is low, which region will be referred to as a variable-voltage variable-frequency region, whereas a frequency control is provided while maintaining a maximum voltage value in such a region where the output voltage fundamental frequency increases such that the magnitude of its output voltage becomes a maximum, which region will be referred to as a constant-voltage variable-frequency region. Since in the variable-voltage variable-frequency region an output voltage is regulated by pulse width modulation control, a multi-pulse mode is utilized in which a half cycle of its output voltage comprises a plurality of voltage pulses. On the other hand, in the constant voltage variable-frequency region, in order to maximize its voltage usage rate to minimize the size of the equipment, a one-pulse mode is utilized in which a half cycle of its output voltage comprises a single broad pulse.

A prior art inverter which uses GTO thyristors as its switching elements, which will be referred to as a GTO inverter hereinafter, has adopted a multi-pulse mode according to a pulse count switching method which decrements by switching the number of pulses to be included in one cycle thereof with an increasing output voltage fundamental frequency as shown in Fig. 3. This is due to an upper limitation of several hundred Hz imposed on a switching frequency in the GTO thyristor. This method, however, involves such a problem that a magnetic noise which accompanies tone variation occurs thereby generating a cacophonic noise due to discontinuity between switching frequencies at the time the pulse count switching is employed.

Further, there is another problem associated with the GTO thyristor such that a leap of voltage of approximately 10% occurs between a three-pulse mode output voltage containing three pulses in a half cycle of its output voltage and a one-pulse mode output voltage containing one pulse therein, depending on a limitation on a minimum OFF time in the GTO thyristor, thereby causing a fluctuation to take place in a torque generated by the traction motor at the time of switching from the three-pulse mode to the one-pulse mode.

### SUMMARY OF THE INVENTION

The main object of the invention is to provide a two-level inverter apparatus which is capable of controlling a magnitude of its output voltage from zero to a maximum value through combination of a multi-pulse mode and a one-pulse mode, wherein the discontinuity between the switching frequencies is substantially eliminated thereby reducing the cacophonic magnetic noise accompanying tone variations, as well as that a continuous control substantially over the entire region of the output voltage is enabled through minimization of a gap in the output voltages between the multi-pulse mode and the one-pulse mode.

The aforementioned main object of the invention will be accomplished by providing such an arrangement comprising: a multi-pulse generator means for generating a gate control signal for outputting a bipolar modulation voltage which is controlled by a pulse width modulation having a uniform pulse generation cycle over any cycle of its output voltage fundamental wave, and a gate control signal for outputting an overmodulation voltage the pulse width of which in the vicinity of a peak of the output voltage fundamental wave is widened than that in the vicinity of a zero cross point thereof; a one-pulse generation means for generating a single pulse having the same polarity as that of the output voltage fundamental wave; and a selection means for selecting either one of the outputs from the multi-pulse generation means and the one pulse generation means in dependence on a condition of the number of pulses contained in one cycle of the output fundamental wave, a magnitude of an output voltage, a modulation ratio, or an output voltage fundamental frequency.

By arranging the multi-pulse generation means such that a pulse generation cycle of a pulse width modulated portion on an output voltage waveform is adapted to be set independently of the output voltage fundamental frequency, it becomes possible that its switching frequency at the time of bipolar modulation becomes constant, and that its switching frequency at the time of overmodulation is caused gradually to approach a predetermined switching frequency set for at the time of one-pulse, thereby eliminating discontinuity between switching frequencies.

Further, by controlling an output voltage at which changing between the multi-pulse mode and the one-pulse mode should be enabled as well as controlling a phase with respect to an output voltage fundamental wave under a changing timing, it becomes possible to change between the both modes smoothly without causing fluctuations in the current and torque that the motor generates.

### BRIEF DESCRIPTION OF THE DRAWINGS

The invention disclosed herein will be understood better with reference to the following drawings of which:
Fig. 1 is a schematic diagram illustrating one embodiment of the invention;
Fig. 2 is a schematic diagram indicating operational characteristics of a traction motor inverter of the invention;
Fig. 3 is an example of a prior art inverter modulation method;
Fig. 4 is a schematic diagram indicating operational characteristics of an inverter of the invention;
Fig. 5 is a schematic diagram illustrating one example of a configuration of a multi-pulse generation means of the invention;
Fig. 6 is a schematic diagram illustrating a modulation waveform, a carrier waveform, and a switching function in a bipolar mode;
Fig. 7 is a schematic diagram illustrating a modulation waveform, a carrier waveform,and a switching function in an overmodulation mode;
Fig. 8 is a diagram illustrating a fundamental waveform of an output voltage and a switching function in one pulse mode associated thereto;
Fig. 9 is a schematic diagram indicative of an occurrence of a beat phenomenon;
Fig. 10 is a diagram indicating a correlation between the average pulse number in the vicinity of zero cross point of output voltage fundamental wave and the current pulsation;
Fig. 11 is a diagram showing that the transient current fluctuation immediately after mode change varies according to the shift phase;
Fig. 12 is a diagram showing the mode change timing in Fig. 11(a);
Fig. 13 is a diagram showing the mode change timing in Fig. 11(b);
Fig. 14 is a diagram showing a relationship between the shift phase and the transient current fluctuation immediately after mode change;
Fig. 15 is a diagram showing a shift phase set allowable region;
Fig. 16 shows an example of arrangements of the PWM mode select means of the invention; and
Fig. 17 is a diagram showing a relationship between the output voltage fundamental frequency of the inverter and the the switching frequency according to the invention.

### [Descriptions of Numerals]

1...integrator, 2...multipulse generation means, 3...one-pulse generation means,4...PWM mode selection means, 5...two-level three phase PWM inverter, 6...induction motor, 7...filter reactor, 8...smoothing capacitor, 9...DC line, 21...function $\text{y=sin(x)}$ , 22...sinusoidal wave generation means, 23...switching frequency, 24...switching function arithmetic means, 241...modulation wave ax, 242...carrier c, 243...switching function S1x, 244...modulation wave ax, 245...carrier c, 246...switching function S1x, 31...output voltage fundamental wave, 32...switching function S2x, 41...shift voltage set means, 42...mode select command generation means, 43...shift phase set means, 44...shift phase control means, 45, 46, 47...mode select switches.

### PREFERRED EMBODIMENTS

Preferred embodiments of the present invention will be described in the following with reference to Figs. 1 to 17.

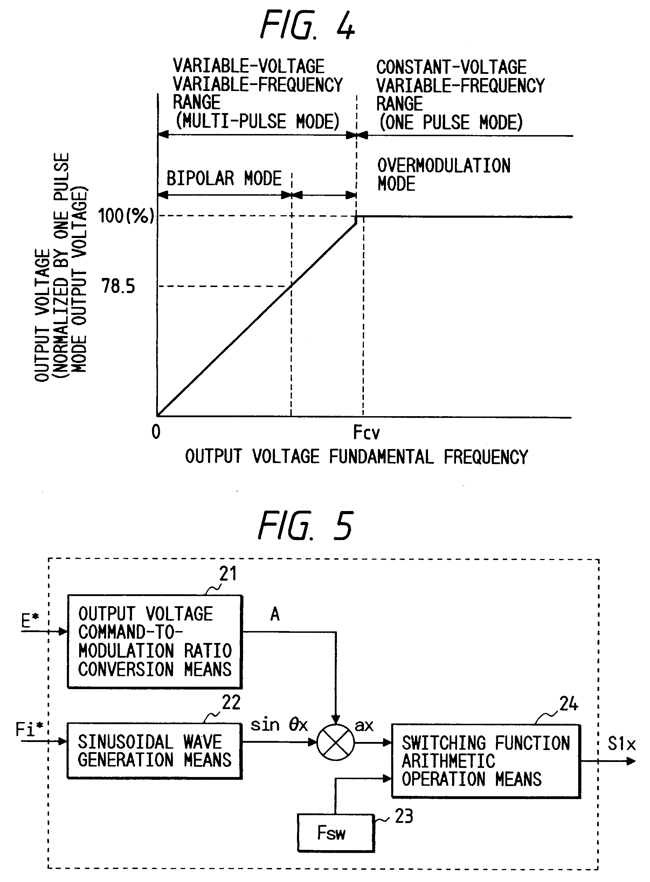

A schematic diagram indicative of a PWM mode of inverter operation according to the invention is shown in Fig. 4. The inverter is operated in such a manner that it is operated in a bipolar mode in its low output voltage range, in an overmodulation mode in its high output voltage range, and in one pulse mode in its maximum output voltage range respectively.

Fig. 1 is a schematic diagram illustrative of one embodiment of the invention, where numeral 6 is an induction motor, 5 is a two-level three-phase PWM inverter which drives the induction motor, 9 is an inverter power source from an aerial direct current feeder, and 7, 8 denote respectively a filter reactor and a capacitor provided on the DC input side of the inverter.

In Fig. 1, a multi-pulse generation means 2, a one-pulse generation means 3 and a PWM mode select means 4 respectively generate inverter control signals on the basis of an output voltage command E* of the inverter and an output voltage fundamental wave phase ϑx of each phase which is obtained by integrating its frequency command Fi* in an integrator 1 (where suffix x represents any phase of u, v, w). Regarding these inverter control signals, S1ₓ, S2ₓ and Sₓ are called a switching function which is defined to take 1 when the positive arm of the inverter is ON, and take O when the negative arm thereof is ON.

First, how these inverter control signals are generated will be described below.

An example of the multi-pulse generation means 2 is shown in Fig. 5 which indicates only one phase component of its contents. Here, switching functions in the bipolar mode and the overmodulation mode are generated by the same generating means. An output voltage command-to-modulation ratio conversion means 21 obtains a modulation ratio A, that is, amplitude of a modulation wave, from an output voltage command E*. Assuming a carrier amplitude to be 1, the ratio becomes such that 0≦A≦1 in the bipolar mode, and that A>1 in the overmodulation mode. In order that a magnitude of the output voltage fundamental wave coincides with the voltage command, E* and A are adapted to correspond to equation 1 in the bipolar mode, and to equation 2 in the overmodulation mode.

$\text{E*} \text{=} \frac{\text{π}}{\text{4}} \text{A} \text{eq.1}$ 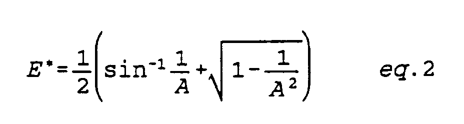
When a function $\text{y=sin (x)}$ in step 22, sinϑx of the output voltage fundamental wave phase ϑx (equivalent to modulation phase) is obtained, which is further multiplied by the modulation ratio A to produce a modulation wave ax. This modulation wave aₓ and a carrier frequency Fc (which is equivalent to the switching frequency in the bipolar mode) are given to a switching function computing means 24 thereby to obtain a switching function S1ₓ.

The switching function computing means 24 generates a carrier of triangular pulses having an amplitude of 1 and a frequency of Fc, which is compared with a value of the modulation wave to generate a switching function. Alternatively, the switching function may be obtained without using such triangular pulses through computation of the modulation wave aₓ and its pulse intervals.

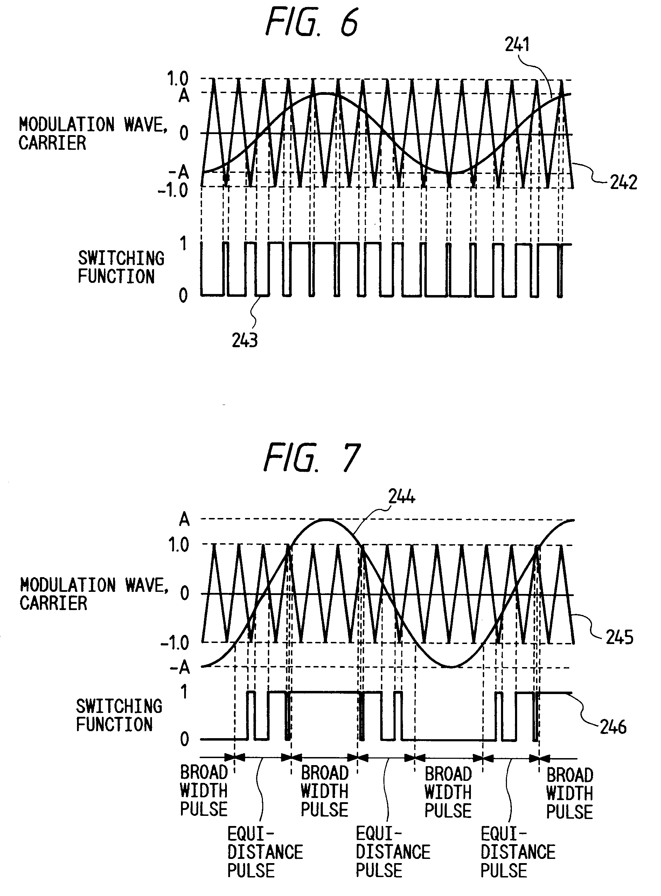

Figs. 6 and 7 show examples of waveforms of the switching functions according to the bipolar mode and the overmodulation mode obtained through comparison with the triangular pulses.

In the inverter equipment according to the present invention, devices such as IGBTs, large capacity transistors or the like which can be operated at switching frequencies of several kHz are utilized as a switching element (hereinafter referred to as an IGBT inverter in general), and the modulation wave and the carrier are arranged to be asynchronous in the multi-pulse mode operation. Thereby, its switching frequency is adapted to be constant in the bipolar mode, and to gradually approach a predetermined switching frequency in the one pulse mode which will be described later.

Since the modulation wave and the carrier wave are asynchronous in the multi-pulse mode, it is necessary for the carrier to have a substantially higher frequency than the modulation frequency, preferably to have an approximately ten times higher frequency according to the experiences.

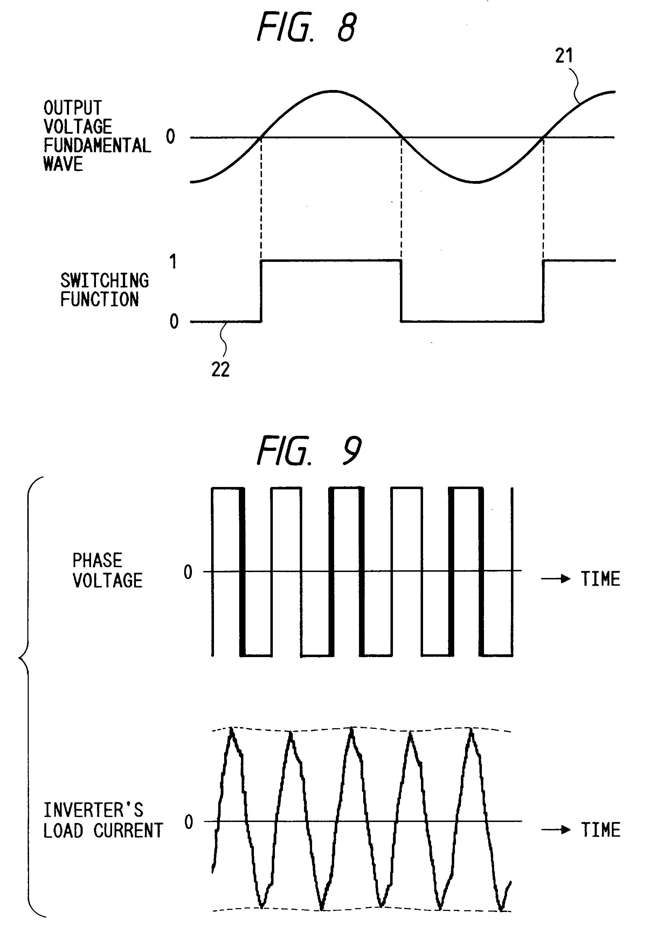

An example of a waveform of switching function which is generated by the one pulse generation means of Fig. 1 is shown in Fig. 8. When a sign of the fundamental wave of output voltage is positive, irrespective of its amplitude, a value of switching function S2ₓ is adapted to be 1, and when the sign is negative the value of S2ₓ is adapted to be 0.

Next, an arrangement for combining the multi-pulse mode and the one pulse mode so that the high output voltage range can be controlled smoothly will be described in the following.

There is a literature on a prior art overmodulation method entitled "Overmodulation control method for voltage-type three-phase PWM inverters" which appeared in the National Convention Proceedings No.106, Heisei 3, Industrial Application Division, the Japan Society of Electric Engineers. According to this prior art, a six-step inverter operation is described to have been overextended to increase the modulation ratio in the overmodulation mode, thereby to cover one pulse mode operation. However, when the one pulse mode is realized as an extension of the overmodulation mode, that is, the overmodulation is realized by excessively increasing the modulation ratio, there occur such problems as follows.

A first problem is that a changing point at which the overmodulation mode is changed to the one pulse mode depends on its switching frequency, thereby, it cannot be set at discretion.

A second problem is that in the case where a modulation wave and a carrier wave are asynchronous in the overmodulation mode, it occurs that pulses of modulation wave in the vicinity of zero-cross point thereof may be or not be generated in the vicinity of a border between the overmodulation mode and the one-pulse mode due to the influence of turn-on and turn-off time of the devices. As a result, there occurs unbalance between the positive and the negative output voltages, thereby causing a beat phenomenon to be introduced by which a low frequency pulsation is superimposed on a load current of the inverter.

A third problem is that with reference to Fig. 7, an output voltage waveform (which is equivalent to the waveform of a switching function to be described later) can be divided into two portions: one having a uniform pulse interval (equi-distance pulse), that is, having a uniform pulse generation cycle in the vicinity of the zero cross of the modulation wave; and the other portion having a single broad pulse width component with its center corresponding to a peak of the modulation wave, thereby, it is anticipated that a switch-over from the overmodulation mode to the one-pulse mode may occur in any portion having an equidistance pulse in the overmodulation mode. In this instance, a load current in the inverter is fluctuated, which may result in a breakdown of switching elements due to overcurrents or in a substantial fluctuation in a torque generated by the inverter motor.

In order to solve the foregoing problems, it is necessary to specify a particular shift voltage (hereinafter referred to as a shift voltage) at which a shift between the overmodulation and the one-pulse mode is allowed, and a particular phase (hereinafter referred to as a shift phase) in the output voltage fundamental wave at which the shift should be executed.

First, a manner how the shift voltage is specified will be described below.

It is desirable for the shift voltage for performing shifting between the overmodulation mode and the one-pulse mode thereat to be set at a value in close proximity of the output voltage in the one-pulse mode operation, that is, in proximity of 100 % because that a fluctuation in torque that the motor generates during mode shifting can be minimized when a difference of its output voltage from its maximum value available is minimum.

In the asynchronous PWM, however, individual voltage pulses contained in one cycle of the output voltage fundamental wave have a different pulse width according to each cycle, and when the number of pulses decreases in the vicinity of the zero cross point of the output voltage fundamental wave as the output voltage in the overmodulation mode approaches 100 %, its adverse effect becomes significant causing an unbalance between the positive and negative polarities of output voltages, eventually causing a beat phenomenon in the load current of the inverter. An example of such is shown in Fig. 9.

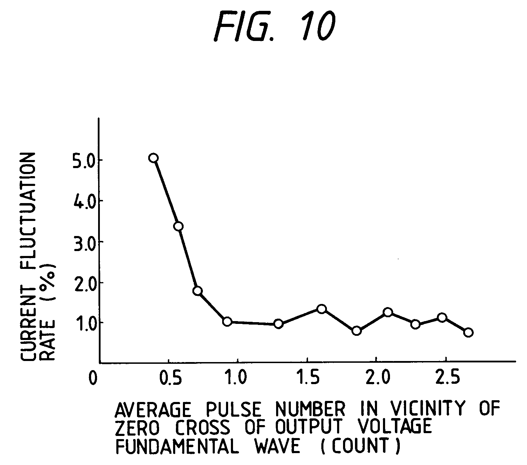

With reference to Fig. 10, there is shown an example of relations between an average pulse number in the vicinity of zero cross point of the output voltage fundamental wave and a current pulsation due to the beat phenomenon. A portion of the modulation wave where its absolute value is under 1.0 corresponds to an equidistance pulse region as shown in Fig. 7, thereby, an average pulse number can be obtained by equation 3. Further, the current pulsation ratio is defined by equation 4. It is shown by Fig. 10 that unless at least one pulse is secured in the vicinity of zero cross point of the output voltage fundamental wave, the low frequency pulsation in the inverter load current due to the beat phenomenon becomes extremely great. 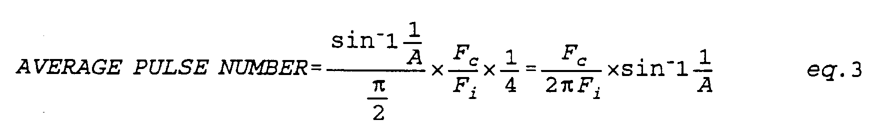
$\text{(current pulsation rate)=[(current peak-to-peak)-(current fundamental wave's peak-to-peak)]/[(current fundamental wave's peak-to-peak)] x 100 (%) eq. 4}$

Thereby, an appropriate shift voltage is preferably set at a value which ensures at least one voltage pulse in the vicinity of the zero cross point of the output voltage fundamental wave. Since this value depends on the output fundamental frequency Fi* and the carrier frequency Fc in the multi-pulse mode, there may be provided a means for obtaining this value from calculation of these values, or this value may be calculated and preset beforehand from an upper limit of the output voltage fundamental frequency Fi*.

Next, a manner how the shift phase should be controlled will be described in the following.

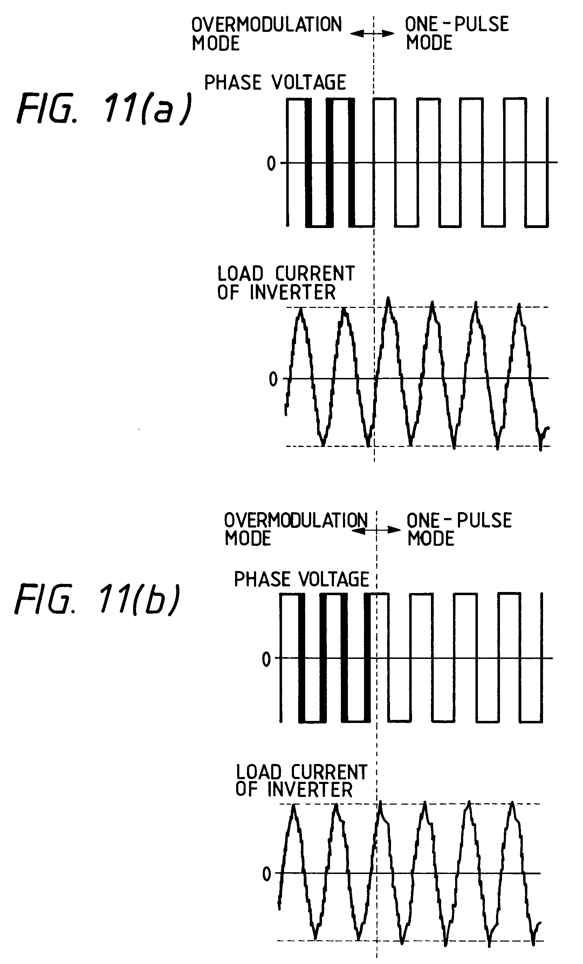

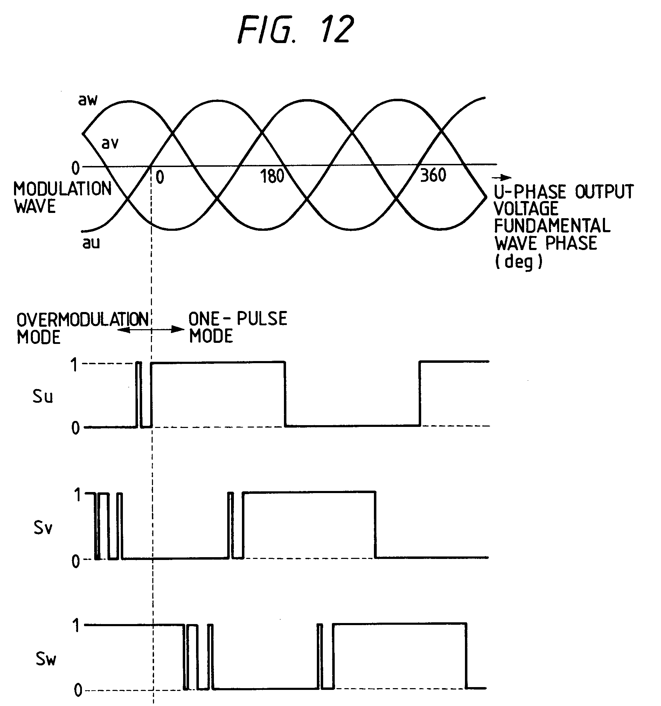

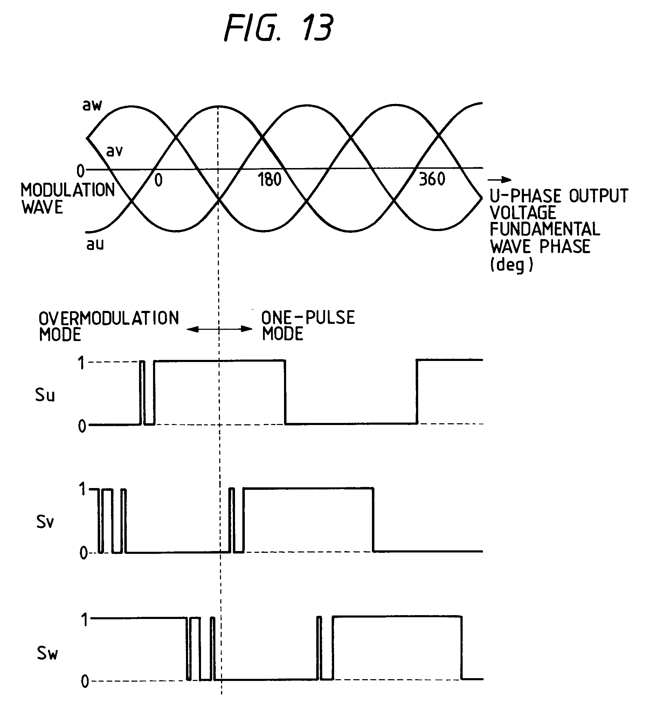

In dependence on a phase of the output voltage fundamental wave at the time when a change between the overmodulation mode and the one-pulse mode occurs, a manner how transient fluctuations appear in a load current in the inverter and in a torque generated immediately after the mode changing differs. An example of such current fluctuations is shown in Fig. 11. Fig. 11(a) shows a case where all the three phases were changed in batch at 0° of U-phase of the output voltage fundamental wave as illustrated in Fig. 12, and where a transient current fluctuation was observed immediately after mode changing. In contrast, Fig. 11(b) shows another case where all the three phases were changed in batch at 90° of U-phase of the output voltage fundamental wave as illustrated in Fig. 13, and where there was observed almost no transient current fluctuation.

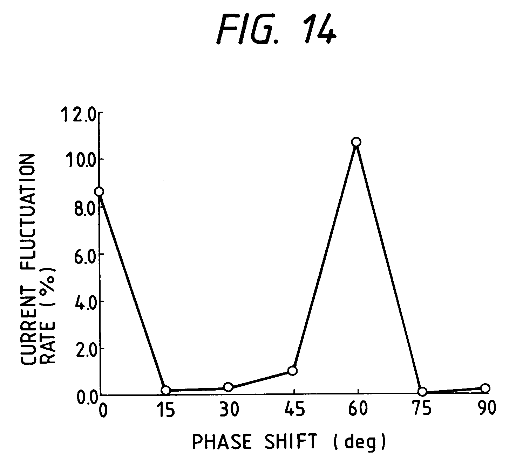

With reference to Fig. 14, there is shown an example of relationships between the shift phase (U-phase taken as a reference) of the output voltage fundamental wave when shifting all the three phases in batch from the overmodulation mode to the one-pulse mode and the transient current fluctuation, where the current fluctuation rate is defined by equation 5.

$\text{(current fluctuation rate)=[(transient peak current at mode change)-(peak steady current in one-pulse mode)]/[(peak steady current in one-pulse mode)] x 100 (%) eq. 5}$

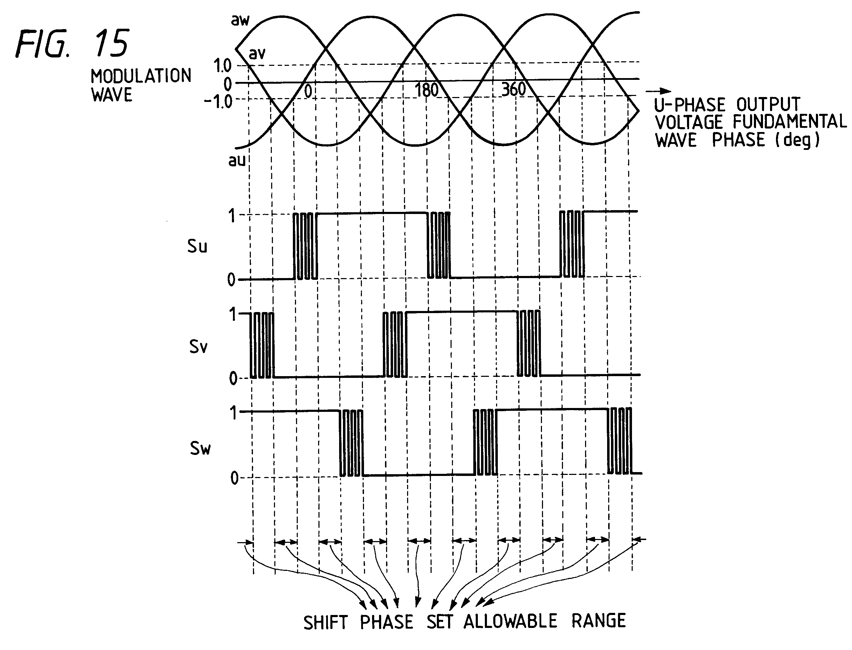

In Fig. 14, at every 60° of phase of the output voltage fundamental wave a large current fluctuation rate appears. This is the case where a mode change between the overmodulation and the one-pulse modes takes place while one of the three phases is in the equi-distance pulse region in the overmodulation mode, thereby, allowing mixed presence of both the modes which causes an increased transient unbalancing of the output voltages among three phases, thereby causing a large transient current fluctuation. Therefore, according to the invention, such transient fluctuations in the current and torque can be successfully suppressed by arranging such that all the shift phase is set in a portion where all the phases are in a wide pulse region and in the overmodulation mode as illustrated in Fig. 15.

In order to enable batch mode changes from the overmodulation mode to the one-pulse mode to be executed for the three phases, it is necessary to secure a region where all output voltages in the overmodulation mode from all the three phases coincide with a wide pulse region. For this, it must be arranged such that at a cross point of modulation waves of any two of the three phases (that is, at 30°, 90°, 150°, 210°, 270°, 330° in respect of a reference U-phase modulation wave), an absolute value of the modulation wave is greater than 1.0. For example, in respect of 30°, where $\text{au=Asin30°>1}$ , thus, A>2, and where a correlation between the modulation ratio A and the output voltage E* in the overmodulation mode can be obtained by equation 2, it must hold that E*>95.6%. Therefore, in order to allow a batch mode change for the three phases to be executed between the overmodulation and the one-pulse mode, a shift voltage must be set at a value which is greater than 95.6%, and has at least one voltage pulse in the vicinity of the zero cross point of the output voltage fundamental wave in the overmodulation mode.

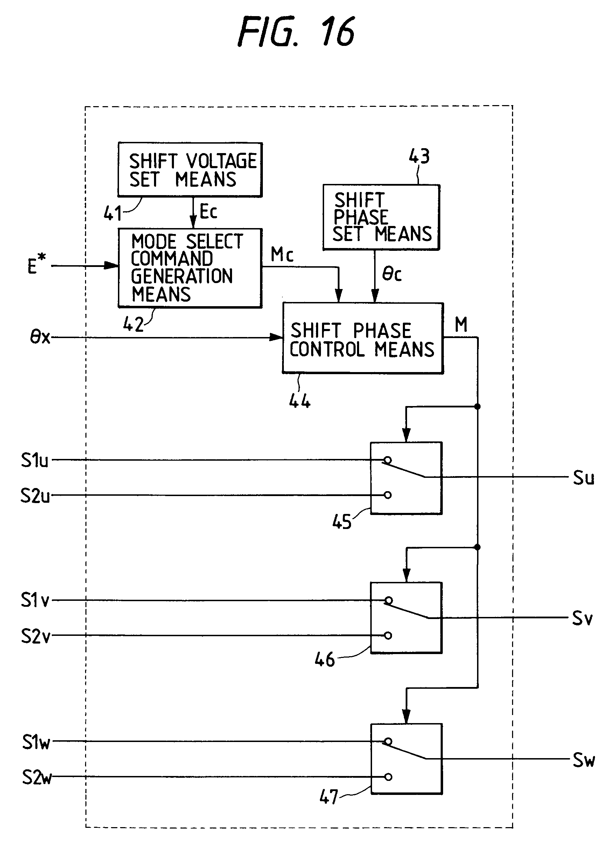

An example of arrangement of a PWM mode select means 4 for implementing the above-mentioned shift voltage and shift phase controls of the invention is shown in Fig. 16. In the drawing, a mode select command generation means 42 compares a shift voltage Ec set in a shift voltage means 41 and a voltage command E*, and outputs a mode select command Mc indicative of which one to select of the multipulse mode and the one-pulse mode.

The mode select command Mc has been described hereinabove that it is obtained on the basis of the output voltage command E*, however, since the output voltage command E* univocally corresponds to the modulation ratio A, it may be arranged such that a particular modulation ratio Ac corresponding to the shift voltage is preset, which is then compared with the modulation ratio A to generate the mode select command Mc.

Further, also in the variable voltage variable frequency region, since the output voltage command and the output voltage fundamental frequency univocally correspond each other, it may be arranged such that a particular output voltage fundamental frequency Fic which corresponds to the shift voltage may be preset beforehand, which is then compared with the frequency command Fi* to generate the mode select command Mc.

A shift voltage control means 44 reads Mc, and in case a mode change is required, compares phase ϑx of the output voltage fundamental wave and a shift phase ϑc set in a shift phase set means 43, then if $\text{ϑx=ϑc}$ , it changes its mode select signal M. In dependence on the mode select signal M, mode select switches 45, 46, 47 select either one of output S1x of the multipulse generation means and output S2x of the one-pulse generation means, then determine its switching function Sx.

The shift phase may also be controlled in manner such that by taking absolute values of the modulation wave at respective phases, and if they all exceed 1.0, since which indicates that all the three phases lie in a wide pulse region in the overmodulation mode, a change of output from between the multipulse generation means and the one-pulse generation means is enabled at this instance.

Thereby, the two-level inverter equipment according to the invention has been provided which features such advantages that a gap in the output voltages at the time of mode change between the multipulse mode and the one-pulse mode can be reduced as small as 1-2 % in comparison with approximately 10 % in the conventional GTO inverter, thereby allowing a continuous control of the output voltage from zero to its maximum value, and that a smooth change can be ensured between the multipulse mode and the one-pulse mode operation without causing any fluctuations in the current and the generated torque.

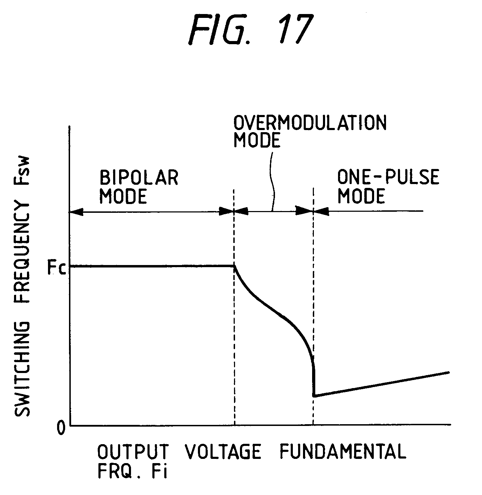

With reference to Fig. 17 there is shown a relation between the output voltage fundamental frequency and the switching frequency, where there exist no such large discontinuities as observed in Fig. 3 indicative of the conventional inverter modulation method, thereby eliminating the discontinuous tone change occurring due to the magnetic noise.

In the inverter equipment which is capable of controlling its output voltage from zero to a maximum voltage by use of the multi-pulse mode and the one-pulse mode in conjunction according to the invention, discontinuous changes in the magnetically-induced noise can be eliminated, and a substantially continuous control over the full range of its output voltage can be accomplished as well.

## Claims

1. An electric power converter system which converts direct current into alternating current having a binary voltage level, comprising:
means for generating a gate control signal for generating a pulse width modulation controlled pulse having a uniform pulse generation period over any one cycle of its output voltage fundamental wave in a low output voltage region;
multi-pulse generation means (2) for generating a gate control signal (S2ₓ) for generating a pulse which has a broader pulse width in the vicinity of a peak region of the output voltage fundamental wave than that in the vicinity of a zero-cross point thereof in a high output voltage region;
one-pulse generation means (3) for generating a gate control signal (S1ₓ) for generating a single pulse having a same polarity as that of the output voltage fundamental wave over a half cycle of the output voltage fundamental wave in a maximum output voltage region; and
means (4) for changing outputs between from said multi-pulse generation means (2) and said one-pulse generation means (3) in dependence on a predetermined condition.

2. The system of claim 1, wherein said multi-pulse generation means (2) sets a pulse generation cycle of a pulse width modulated portion of its output voltage waveform independently of said output voltage fundamental frequency.

3. The system of claim 1 or 2, wherein said predetermined condition for changing between said multi-pulse generation means (2) and said one pulse generation means (3) is the number of pulses counted in one cycle of the output voltage fundamental wave, an output voltage amplitude, a modulation ratio, or the fact that the output voltage fundamental frequency assumes a present value.

4. The system of claim 3, wherein said present value is 95.6% or more of the maximum output voltage.

5. The system of claim 1 or 2, wherein said change between said multi-pulse generation means (2) and said one pulse generation means (3) is performed at a timing which is included in a broader pulse width region corresponding to a peak region of each fundamental wave of each overmodulation waveform of each phase which constitutes said inverter.
